# EUROPÄISCHE PATENTSCHRIFT

(11) **EP 1 762 963 B1**
(45) Veröffentlichungstag und Bekanntmachung des Hinweises auf die Patenterteilung: **21.10.2009**
(21) Anmeldenummer: 06016889.5
(22) Anmeldetag: 12.08.2006
(51) Int. Cl.: G06K 19/077

(54) **Transponder mit Gehäuse**
Transponder with case
Transpondeur avec boîtier

(30) Priorität: 08.09.2005 DE 202005014230 U
(43) Veröffentlichungstag der Anmeldung: 14.03.2007
(73) Patentinhaber: bekuplast Kunststoffverarbeitungs-GmbH, 49824 Ringe (DE)
(72) Erfinder: Pronk, Jan, 49824 Ringe (DE)
(74) Vertreter: Linnemann, Winfried

(56) Entgegenhaltungen:
- EP-A- 0 922 555
- WO-A-01/51369
- WO-A-01/84492

## Beschreibung

Die Erfindung betrifft einen Transponder mit Gehäuse, wobei der Transponder als Einlegeteil in dem Gehäuse aufgenommen ist.

Transponder sind beispielsweise Identifikationssysteme, die vielfältig in den Bereichen Herstellung, Transport, Lagerung und Vertrieb von unterschiedlichsten Produkten einsetzbar sind, wobei oft an sich bekannte, beliebige Kunststoffbehälter verwendet werden. Dabei bietet dieses Identifikationssystem bzw. der Transponder den Vorteil, daß es berührungslos und ohne optische Hilfsmittel arbeitet, was eine hohe Betriebssicherheit und Unempfindlichkeit gegen Umgebungseinflüsse sicherstellt.

Unter Transponder im Sinne der Erfindung wird nicht nur ein beispielsweise integrierter Schaltkreis (Chip) verstanden, sondern der Transponder kann weitere elektronische Bauelemente, wie Speicher, Sender/Empfänger ebenso umfassen wie eine dieses Bauteil tragende oder umschließende Hülle.

Bevorzugterweise ist der Transponder einem Behälter zugeordnet, der vorzugsweise durch Spritzgießen hergestellt ist.

Behälter dieser Art sind aus der DE-U 92 05 652 und aus der WO 93/24381 bekannt. Beide Dokumente zeigen Kunststoffbehälter, die mit einem integrierten Transponder ausgestattet sind. Hier sind die Transponder jeweils in einem eigenen Kunststoffgehäuse untergebracht, das einteilig oder zweiteilig ausgebildet ist und das eine im Verhältnis zu seiner Fläche große Dicke aufweist.

Weiterhin ist aus der EP 0 922 555 B1 ein Kunststoffbehälter bekannt, der mit einem Einsatzelement ausgestattet ist, das beim Spritzen des Kunststoffbehälters eingespritzt ist. Dieses Einsatzelement kann eine elektronische Datenverarbeitungseinheit sein. Wesentlich ist bei diesem Einsatzelement, daß es rahmenförmig, also mit einer Durchbrechung, im Bereich seiner Fläche ausgeführt ist. Diese Durchbrechung sorgt für eine formschlüssige und damit besonders sichere Verbindung des Einsatzelements in dem übrigen Behälter.

Aus der DE 199 09 065 A1 ist noch ein Verfahren zum Einspritzen eines elektronischen Chips in ein Spritzgussteil, insbesondere in einen Müllbehälter, bekannt. Das Einspritzverfahren ist hier gezielt so gestaltet, daß der Chip allseitig in das Material, aus dem das Spritzgussteil besteht, eingebettet und so vollständig eingeschlossen wird.

Aus der DE 103 10 238 A1 ist ein Behälter aus Kunststoff bekannt, wobei der Behälter durch Spritzgießen hergestellt ist und einen integrierten Transponder aufweist. Der Transponder liegt in einer vorgefertigten Kunststoffumhüllung, mit der er zusammen als Einlegeteil in das Kunststoffmaterial des Behälters bei dessen Herstellung eingespritzt ist. Die Kunststoffumhüllung des Transponders ist durch einen Stapel von miteinander verbundenen, einen Transponderchip und eine damit verbundene Transponderantenne einschließenden Folienlagen gebildet. Die Transponderantenne ist als Flachantenne mit oval, rund, elliptisch oder rechteckig mit stark abgerundeten Ecken in der Ebene der Folienlagen verlaufenden Antennenleitern ausgeführt. Das eingespritzte Einlegeteil liegt oberflächenbündig in einer Wand oder einem Boden des Behälters, wobei zumindest die mit dem Behälter flächig in Kontakt stehenden Folienlagen aus einem mit dem Material des Behälters kompatiblen, sich mit diesem im Spritzvorgang verbindenden Material besteht.

Der aus der DE 103 10 238 A1 bekannte Behälter hat sich in der Praxis dahin gehend bewährt, daß bei der Unterbringung des Transponders an oder in dem Behälter so wenig Platz wie möglich benötigt wird, wobei gleichzeitig Änderungen am Behälter für die Unterbringung des Transponders nicht erforderlich werden.

Es kann aber geschehen, daß der in den Behälter integrierte Transponder durch Stöße oder dergleichen beschädigt wird. Weiter hat es sich gezeigt, daß die Kunststoffbehälter am Ende Ihres Lebenskreislaufs aufgrund der integrierten Transponder nur mit hohem Aufwand einer Kunststoffverwertungsanlage zuführbar sind, da die integrierten Schaltkreise bzw. Transponder mit ihren elektrisch leitenden Bestandteilen aussortiert werden müssen.

Von daher liegt der Erfindung die Aufgabe zugrunde, einen Transponder der eingangs genannten Art, insbesondere sein Gehäuse, mit einfachen Mitteln dahin gehend zu verbessern, daß der Transponder einerseits sehr gut verpackt ist und dadurch äußerst stoßfest gelagert ist, wobei andererseits eine nachteilige Beeinflussung eines Recycelprozesses vermieden werden soll.

Erfindungsgemäß wird die Aufgabe dadurch gelöst, daß das Gehäuse als externes Bauteil ein separates Bodenelement und einen separaten Deckel aufweist, wobei das Gehäuse an seinem Bodenelement zumindest ein Abstandselement aufweist, so daß das Gehäuse im montierten Zustand an einer Aufnahmefläche zu dieser derart beabstandet ist, daß zwischen dem Bodenelement und der Aufnahmefläche eine Spalt gebildet ist.

Dadurch, daß der Transponder bzw. das Einlegeteil in einem relativ stabilen Gehäuse aufgenommen ist, ist der Transponder bzw. der Chip sehr gut verpackt und dadurch äußerst stoßfest gelagert. Im Vergleich zu aufgeklebten Standard-Transponderetiketten ist der Transponder in dem erfindungsgemäßen Gehäuse stoßfester und damit unempfindlicher als ein aufgeklebtes Standard-Transponderetikett und als ein integrierter Transponder in einem Behälter.

Günstig im Sinne der Erfindung ist, wenn das Bodenelement plattenartig ausgeführt ist und die Abstandhalter an seiner Unterseite aufweist.

Vorteilhafterweise ist das Bodenelement in einer bevorzugten Ausführungsform viereckig ausgeführt, wobei jeweils ein Abstandhalter einer Ecke des Bodenelementes zugeordnet ist. Natürlich können Anzahl und Position der Abstandhalter, die in einer bevorzugten Ausführungsform als Füße ausgeführt sind, unterschiedlich sein. Denkbar ist beispielsweise, daß lediglich ein Abstandhalter in etwa mittig an dem Bodenelement angeordnet ist. Natürlich können aber auch zwei, drei, fünf oder mehr Abstandhalter an dem Bodenelement vorgesehen sein. Selbstverständlich kann das Gehäuse verschiedene Abmessungen und/oder Konturen aufweisen. Beispielsweise könnte das Bodenelement auch rund, oval oder elliptisch ausgestaltet sein, wobei der Deckel bevorzugt an die Ausgestaltung des Bodenelementes angepasst ist. Auch der Transponder bzw. das Einlegeteil kann an die Gestaltung des Bodenelementes angepaßt sein.

Zur stoßfesten und stabilen Lagerung des Transponders in dem Gehäuse ist vorteilhaft vorgesehen, daß das Bodenelement aus einem stabilen Kunststoff, Metall oder einem anderen geeigneten Material besteht. Natürlich kann der Deckel aus einem entsprechenden Material bestehen, wobei der Deckel bevorzugt aus demselben Material besteht wie das Bodenelement. Das Material ist dabei selbstverständlich so ausgewählt, daß die drahtlose Datenübertragung vom und zum Transponder nicht behindert wird.

Zweckmäßigerweise weist das Bodenelement an seiner zur Unterseite gegenüberliegenden Oberseite ein Aufnahmeelement zur Aufnahme des als Einlegeteil ausgestalteten Transponders auf. Hierbei kann das Bodenelement an seiner Oberseite einen umlaufenden, erhabenen Rand aufweisen, welcher an die Abmessungen des Transponders angepasst ist, so daß der Transponder einfach in das Bodenelement einlegbar ist und bevorzugt bündig mit dem umlaufenden Rand abschließt. Der Rand kann aber auch unterbrochen sein. Denkbar ist aber auch, daß das Aufnahmeelement als Eintiefung ausgeführt ist.

Zur hinreichenden Befestigung des Transponders mit dem Bodenelement ist vorteilhaft vorgesehen, daß der Transponder als Einlegeteil mit dem Bodenelement verbindbar ist, wobei hier bevorzugt eine stoffschlüssige Verbindung bzw. Klebverbindung gewählt werden kann. Natürlich können aber auch alle anderen geeigneten Verbindungsarten zur Verbindung des Transponders mit dem Bodenelement angewendet werden. Möglich ist aber auch, den Transponder einfach auf das Bodenelement aufzulegen, wobei das Aufnahmeelement eine genügende Lagerung ermöglicht. Zum Abschluss des Gehäuses und sicheren Halt des Transponders darin dient dann der Deckel, worauf weiter unten näher eingegangen wird.

Zweckmäßig im Sinne der Erfindung ist, wenn der als Einlegeteil ausgestaltete Transponder flexibel ist, was seine Handhabung während des Einbauens in das Gehäuse erleichtert und Beschädigungsgefahren vermindert. Alternativ ist aber auch denkbar, daß der Transponder bzw. das Einlegeteil fest bzw. starr oder unflexibel ausgeführt ist.

Zur Abdeckung und zum sicheren Verschließen des Gehäuses ist es günstig im Sinne der Erfindung, wenn der Deckel eine an das Bodenelement angepasste Ausgestaltung aufweist, wobei der Deckel zweckmäßigerweise mit dem Bodenelement verbindbar ist. Der Deckel und das Bodenelement können auf verschiedene Arten miteinander verbunden werden, wobei hier beispielsweise eine Schweißverbindung, Klebverbindung, Nietverbindung oder Schraubverbindung oder andere geeignete Verbindungsart vorgesehen werden kann. Die Verbindung von Deckel und Bodenelement kann auch spritztechnisch mittels einer Hinterspritzung oder Umspritzung ausgeführt sein.

In einer bevorzugten Ausgestaltung ist der in dem Gehäuse aufgenommene Transponder einem Behälter zugeordnet. Von daher betrifft die Erfindung auch einen Behälter, dem ein Transponder zugeordnet ist, der in einem Gehäuse aufgenommen ist, wobei das Gehäuse als externes Bauteil ein separates Bodenelement und einen separaten Deckel aufweist und wobei das Gehäuse an seinem Bodenelement zumindest ein Abstandselement aufweist, so daß das Gehäuse im montierten Zustand an einer einen Teil des Behälters bildenden Aufnahmefläche zu dieser derart beabstandet ist, daß zwischen dem Bodenelement und der Aufnahmefläche ein Spalt gebildet ist.

Alternativ kann der Transponder mit seinem Gehäuse auch an anderen Transportverpackungen oder unmittelbar an dafür geeigneten Produkten angebracht werden. Bevorzugterweise wird das Transpondergehäuse bzw. der Transponder mit seinem Gehäuse zur Verbindung mit dem Behälter oder der Transportverpackung oder dem Produkt verschweißt. Denkbar ist aber auch, daß das Gehäuse an der zugeordneten Aufnahmefläche angeklebt, angenietet oder angeschraubt wird. Selbstverständlich sind auch andere Verbindungsarten denkbar. Vorzugsweise werden zur Verbindung des Gehäuses mit der zugeordneten Aufnahmefläche die vorgesehenen Abstandhalter verwendet, wobei diese bevorzugt als Füße bzw. Fußteile ausgeführt sind.

Vorteilhaft wird damit ein Transponder zur Verfügung gestellt, der mit seinem Gehäuse nachträglich an praktisch jedem Behälter und an vielen Produkten unmittelbar angebracht werden kann. Damit können auch im Markt bereits vorhandene Behälter mit dem Transponder versehen werden. Vorteilhaft ist auch, daß ein Gehäuse mit Transponder eines Behälters bei Bedarf, z.B. bei Defekt, relativ einfach gegen ein neues Gehäuse mit Transponder ausgetauscht werden kann.

Als vorteilhaft ist dabei weiter anzusehen, daß, wenn der Transponder mit seinem Gehäuse mit einem Behälter, einer Transportverpackung oder einem anderen Produkt verbunden ist, der Behälter oder das Produkt durch die Ausbildung des Spaltes zwischen Gehäuse und Anbringungsfläche leicht zu reinigen ist. Günstig ist dies insbesondere dann, wenn der Behälter mit dem Transponder einer üblichen, herkömmlichen Waschstraße zugeführt wird. Gleichzeitig wird mit dem erfindungsgemäßen Transponder mit Gehäuse erreicht, daß dieser waschstraßenbeständiger ist als beispielsweise ein aufgeklebtes Transponderetikett auf dem Behälter.

Sollte der Behälter seine Lebensdauergrenze erreicht haben, ist der Transponder mit seinem Gehäuse vorteilhaft einfach von dem Behälter zu entfernen, so daß beispielsweise der Behälter, welcher üblicherweise als spritzgegossenes Kunststoffteil ausgeführt ist, ohne Probleme recycelt werden kann. Durch das einfache Entfernen des Transponders mit Gehäuses, welcher üblicherweise zum Kunststoffrecycling nicht geeignet ist, da hier gedruckte Schaltkreise bzw. elektrisch leitfähige Bestandteile, insbesondere Metalle oder dergleichen, angeordnet sind, kann der Behälter dem üblichen Kunststoffrecyclingverfahren einfach zugeführt werden. Hierzu muß, z.B. mit einem Hebelwerkzeug, einfach in den vorgesehenen Spalt eingegriffen werden, so daß das Gehäuse von dem Behälter bzw. von der vorgesehenen Aufnahmefläche abgerissen wird. Gleichwohl ist aufgrund der hinreichenden Befestigung an der zugeordneten Aufnahmefläche sichergestellt, daß ein ungewolltes Entfernen ausgeschlossen ist.

Vorteilhafterweise ist das erfindungsgemäße Transpondergehäuse nun derart ausgeführt, daß der Deckel an seiner vom Transponder abgewandten Außenseite eine Fläche zur Aufnahme einer Bedruckung, einer Beschriftung, eines Reliefs und/oder eines Etiketts aufweist. Die Bedruckung kann beispielsweise ein Barcode oder eine Datamatrix sein. Natürlich kann auch ein Firmenlogo oder ein sonst denkbarer Text auf dem Gehäuse, insbesondere auf dem Dekkel, angebracht werden. Als Bedruckungsart kann hier insbesondere ein Thermotransfer-, Inkjet-, Sieb-, Tampon- oder Laserdruck eingesetzt werden; auch eine Heißprägung oder ein Inmouldlabeling kann vorgesehen sein.

Ein Ausführungsbeispiel der Erfindung wird im folgenden anhand einer Zeichnung beschrieben. Die Figuren der Zeichnung zeigen:
- Fig. 1: eine Explosionsdarstellung eines Transpondergehäuses in einer perspektivischen Ansicht,
- Fig. 2: eine perspektivische Ansicht auf eine Unterseite des Transpondergehäuses aus Figur 1,
- Fig. 3: einen Behälter in einer perspektivischen Seitenansicht mit zugeordnetem Transpondergehäuse, und
- Fig. 4: eine Vergrößerung aus Figur 3.

In den unterschiedlichen Figuren sind gleiche Teile stets mit den gleichen Bezugszeichen versehen, so daß diese in der Regel auch nur einmal beschrieben werden.

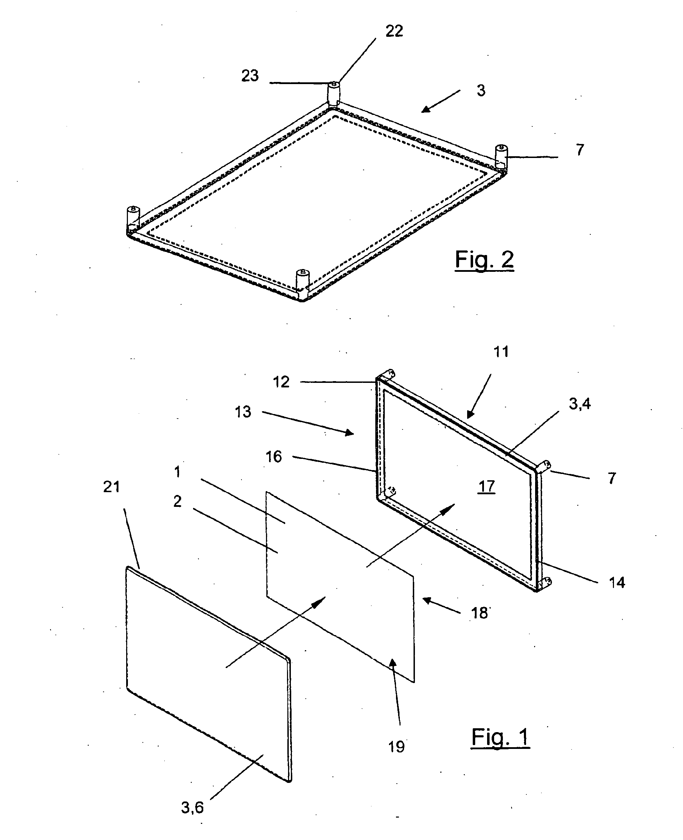

Figur 1 zeigt einen Transponder 1, der als Einlegeteil 2 in einem Gehäuse 3 aufgenommen ist. Das Gehäuse 3 ist als externes Bauteil ausgeführt und weist ein separates Bodenelement 4 und einen separaten Deckel 6 auf.

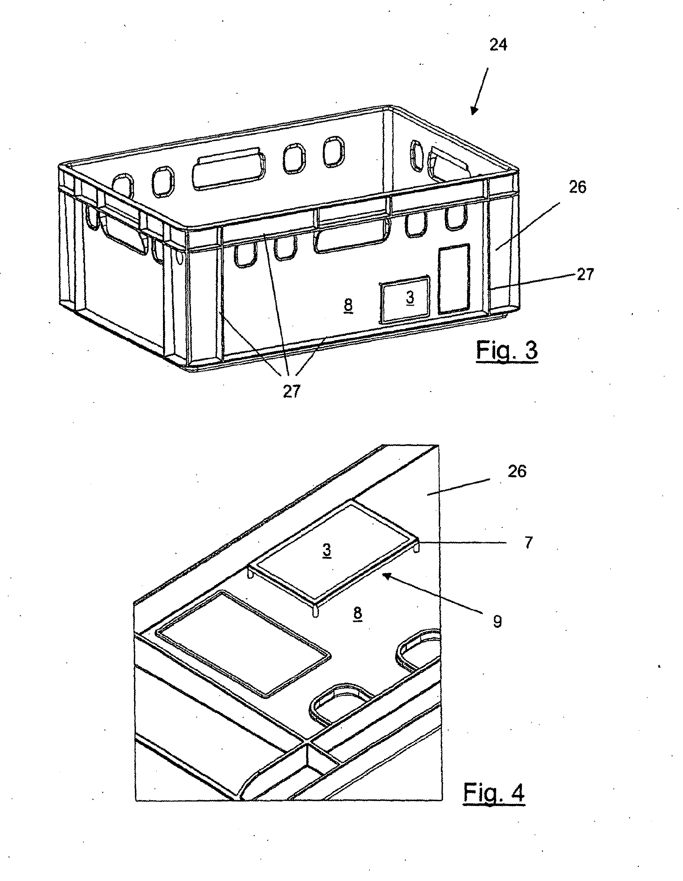

An seinem Bodenelement 4 weist das Gehäuse 3 zumindest ein Abstandselement 7 auf, wobei in dem dargestellten Ausführungsbeispiel vier Abstandselemente 7 als Füße ausgeführt sind. Mittels der Abstandselemente 7 ist das Gehäuse 3 im montierten Zustand an einer Aufnahmefläche 8 zu dieser derart beabstandet, daß zwischen dem Bodenelement 4 und der Aufnahmefläche 8 ein Spalt 9 gebildet ist (Figur 4).

Der Transponder 1 besteht in einer bevorzugten Ausgestaltung aus einem Transponderchip und einer damit elektrisch verbundenen Transponderantenne. Die Transponderantenne kann die Form einer Flachantenne mit mehreren in Form von Ovalen verlaufenden metallischen Leitern aufweisen, z.b. aus Kupfer, Silber, Aluminium, Messing oder einem anderen geeigneten elektrisch leitfähigen Material. Der Transponder 1 ist hüllenartig, beispielsweise mittels Folien, umschlossen, so daß insgesamt das Einlegeteil 2 gebildet ist. Natürlich kann der Transponder 1 ohne Umhüllung auch selbst das Einlegeteil 2 bilden.

Das Bodenelement 4 ist plattenartig ausgeführt, wobei die Abstandhalter 7 an seiner Unterseite 11 angeordnet sind. In dem dargestellten Ausführungsbeispiel ist das Bodenelement 4 viereckig ausgeführt, wobei jeweils ein Abstandhalter 7 jeweils einer Ecke 12 des Bodenelementes 4 zugeordnet ist.

An seiner zur Unterseite 11 gegenüberliegenden Oberseite 13 weist das Bodenelement 4 ein Aufnahmeelement 14 zur Aufnahme des Transponders 1 bzw. des Einlegeteils 2 auf.

In dem dargestellten Ausführungsbeispiel nach Figur 1 ist das Aufnahmeelement 14 als umlaufender, erhabener Rand 16 dem Bodenelement 4 an seiner Oberseite 13 zugeordnet. Hierdurch wird ein an den Transponder 1 angepaßter Einlegebereich 17 zur Aufnahme des Transponders 1 an dem Bodenelement 3 gebildet.

Der Transponder 1 ist z.B. als Standard-Inlay mit den Frequenzen HF oder UHF ausgeführt, wobei selbstverständlich auch alle anderen Frequenzen möglich sind. Hinzuweisen ist hierbei darauf, daß der Transponder 1 nicht unbedingt ein Standard-Bauteil sein muß.

Zur Verbindung des Transponders 1 mit dem Bodenelement 4 wird der Transponder 1 bzw. das Einlegeteil 2 in den Einlegebereich 17 eingelegt, der wie der Transponder 1 bzw. das Einlegeteil 2 viereckig ausgeführt ist. Mittels einer Klebefläche an einer der Oberseite 13 des Bodenelementes 3 zugewandten Unterseite 18 des Transponders 1 wird dieser hinreichend fest mit dem Bodenelement 4 verbunden, wobei eine zur Unterseite 18 gegenüberliegende Oberseite 19 des Transponders 1 bevorzugt bündig mit dem Rand 16 abschließt.

Der Deckel 6 weist eine an das Bodenelement 4 angepasste Ausgestaltung auf. Hierbei ist der Deckel 6 derart ausgestaltet, daß, wenn der Transponder 1 in dem Einlegebereich 17 des Bodenelementes 4 aufgenommen ist, eine sichere, hinreichend feste, insbesondere wasserdichte Verbindung zum Bodenelement 4 hergestellt werden kann. Dabei liegt der Deckel 6 mit seinen Randbereichen 21 auf dem umlaufenden, erhabenen Rand 16 des Bodenelementes 4 auf. Bei einem möglicherweise unterbrochenen Rand, kann der Deckel 6 entsprechend ausgestaltete Zähne oder Erhöhungen aufweisen, die in vorhandene Lücken in dem Rand eingreifen.

Zur Verbindung des Deckels 6 mit dem Bodenelement 4 kann beispielsweise eine Schweißverbindung, eine Klebverbindung, eine Nietverbindung oder eine Schraubverbindung vorgesehen werden, wobei aber auch eine kunststoffspritztechnische Verbindung, beispielsweise eine Hinterspritzung oder eine Umspritzung, denkbar ist. Selbstverständlich sind auch andere geeignete Verbindungsarten des Dekkels 6 mit dem Unterteil bzw. dem Bodenelement 4 verwendbar.

In Figur 2 ist ein komplett zusammengebautes Gehäuse 3 dargestellt. Das Gehäuse 3, insbesondere sein Bodenelement 4 und sein Deckel 6, können aus einem Kunststoff, Metall oder anderem geeigneten Material bestehen, so daß ein hinreichend stabiles Gehäuse 3 gebildet ist, so daß der Transponder 1 stoßfest gelagert ist. Das Material darf dabei selbstverständlich die per Funkstrecke drahtlosen erfolgende Datenübertragung vom und zum Transponder nicht stören.

Die Abstandselemente 7 weisen an ihrem freien Ende 22 jeweils eine mittig angeordnete dornartige Erhöhung 23 auf (Figur 2), so daß das Gehäuse 3 zunächst zur provisorischen Befestigung an der Aufnahmefläche 8 über die dornartigen Erhöhungen 23 angesetzt werden kann, indem ein leichter Schlag auf die Ecken 12 von der Oberseite 13 des Gehäuses 3 bzw. des Deckel 6 oder Bodenelementes 4 erfolgt. Auf dem Rest der freien Fläche des freien Endes 22 kann ein Klebstoff angebracht bzw. aufgebracht sein, so daß das Gehäuse 3 hinreichend fest mit der Aufnahmefläche 8 verbindbar ist. Selbstverständlich können die dornartigen Erhöhungen 23 aber auch derart ausgeführt sein, daß auf einen zusätzlichen Klebstoff zur hinreichenden Befestigung an der Aufnahmefläche 8 verzichtet werden kann. Alternativ können die Abstandselemente 7 an ihrem freien Ende 22 aber auch eben ausgeführt sein. Zur Verbindung des Gehäuses 3 mit der Aufnahmefläche 8 kann auch eine Schweißverbindung, eine Nietverbindung oder eine Schraubverbindung usw. vorgesehen sein.

In einer bevorzugten Ausgestaltung der Erfindung ist der Transponder 1 mit seinem Gehäuse 3 an der Aufnahmefläche 8 eines Behälters 24 angeordnet, wie in den Figuren 3 und 4 gezeigt.

Der Behälter 24 besteht aus einem Kunststoff und ist ein Spritzgußteil. In dem in Figur 3 dargestellten Ausführungsbeispiel ist der Transponder 1 mit seinem Gehäuse 3 der Außenseite einer Längsseitenwand 26 des Behälters 24 zugeordnet. Hierbei ist der Transponder 1 mit seinem Gehäuse 3 in einem unteren Bereich, also in einem Fußbereich, des Behälters 24 befestigt. Dabei liegt der Transponder mit seinem Gehäuse 3 hinter an der Außenseite des Behälters 24 vorhandenen Rippen 27 zurück, sodaß das Gehäuse 3 trotz seiner Lage an der Außenseite des Behälters 24 gegen äußere Einwirkungen, z.B. durch andere Behälter oder durch Laderaumwände eines Transportfahrzeugs, gut geschützt ist.

Deutlich entnehmbar ist der Figur 4, daß das Gehäuse 3 aufgrund der vorgesehenen Abstandselemente 7 im montierten Zustand zu der Aufnahmefläche 8 derart beabstandet ist, daß zwischen dem Bodenelement 4 bzw. dem Gehäuse 3 und der Aufnahmefläche 8 ein Spalt 9 gebildet ist.

Selbstverständlich kann der Transponder 1 mit seinem Gehäuse 3 aber auch an jeder anderen Transportverpackung oder unmittelbar an dafür geeigneten Produkten angebracht werden.

## Patentansprüche

1. Transponder (1) mit Gehäuse (3), wobei der Transponder (1) als Einlegeteil (2) in dem Gehäuse (3) aufgenommen ist,
**dadurch gekennzeichnet,**
**daß** das Gehäuse (3) als externes Bauteil ein separates Bodenelement (4) und einen separaten Deckel (6) aufweist, wobei das Gehäuse (3) an seinem Bodenelement (4) zumindest ein Abstandselement (7) aufweist, so daß das Gehäuse (3) im montierten Zustand an einer Aufnahmefläche (8) zu dieser derart beabstandet ist, daß zwischen dem Bodenelement (4) und der Aufnahmefläche (8) ein Spalt (9) gebildet ist.

2. Transponder nach Anspruch 1, **dadurch gekennzeichnet, daß** das Bodenelement (4) plattenartig ausgeführt ist und die Abstandhalter (7)an seiner Unterseite (11) aufweist.

3. Transponder nach Anspruch 1 oder 2, **dadurch gekennzeichnet, daß** das Bodenelement (4) viereckig ausgeführt ist, wobei jeweils ein Abstandhalter (7) einer Ecke (12) des Bodenelementes (4) zugeordnet ist.

4. Transponder nach einem der vorhergehenden Ansprüche, **dadurch gekennzeichnet, daß** das Bodenelement (4) an seiner zur Unterseite (11) gegenüberliegenden Oberseite (13) ein Aufnahmeelement (14) zur Aufnahme des Transponders (1) aufweist.

5. Transponder nach einem der vorhergehenden Ansprüche, **dadurch gekennzeichnet, daß** das Einlegeteil (2) mit dem Bodenelement (4) verbindbar ist.

6. Transponder nach einem der vorhergehenden Ansprüche, **dadurch gekennzeichnet, daß** das Einlegeteil (2) flexibel ausgeführt ist.

7. Transponder nach einem der vorhergehenden Ansprüche, **dadurch gekennzeichnet, daß** der Deckel (6) eine an das Bodenelement (4) angepaßte Ausgestaltung aufweist.

8. Transponder nach einem der vorhergehenden Ansprüche, **dadurch gekennzeichnet, daß** der Deckel (6) mit dem Bodenelement (4) verbindbar ist.

9. Transponder nach einem der vorhergehenden Ansprüche, **dadurch gekennzeichnet, daß** das Gehäuse (3) mit einem Behälter (24) verbindbar ist.

10. Transponder nach einem der vorhergehenden Ansprüche, **dadurch gekennzeichnet, daß** der Deckel (6) an seiner vom Transponder abgewandten Außenseite eine Fläche zur Aufnahme einer Bedruckung, einer Beschriftung, eines Reliefs und/oder eines Etiketts aufweist.

## Claims

1. A transponder (1) comprising a housing (3), wherein the transponder (1) is received in the housing (3) as an insertion part (2),
**characterized in that**
the housing (3), being an external component, comprises a separate bottom element (4) and a separate cover (6), wherein the housing (3) comprises at least one spacer element (7) at its bottom element (4), with the result that the housing (3), when mounted to a receiving surface (8), is spaced apart therefrom such that a gap (9) is formed between the bottom element (4) and the receiving surface (8).

2. The transponder according to Claim 1, **characterized in that** the bottom element (4) is designed as a plate and comprises the spacers (7) on its bottom side (11).

3. The transponder according to Claim 1 or 2, **characterized in that** the bottom element (4) is rectangular in its design, wherein one spacer (7) each is allocated to a corner (12) of the bottom element (4).

4. The transponder according to anyone of the preceding claims, **characterized in that**, on its upper side (13) which is arranged opposite to its bottom side (11), the bottom element (4) comprises a receiving element (14) for receiving the transponder (1).

5. The transponder according to anyone of the preceding claims, **characterized in that** the insertion part (2) can be connected to the bottom part (4).

6. The transponder according to anyone of the preceding claims, **characterized in that** the insertion part (2) is flexible in its design.

7. The transponder according to anyone of the preceding claims, **characterized in that** the cover (6) comprises a design that is adjusted to the bottom element (4).

8. The transponder according to anyone of the preceding claims, **characterized in that** the cover (6) can be connected to the bottom element (4).

9. The transponder according to anyone of the preceding claims, **characterized in that** the housing (3) can be connected to a container (24).

10. The transponder according to anyone of the preceding claims, **characterized in that**, on its exterior facing away from the transponder, the cover (6) comprises a surface for receiving a print, an inscription, a relief and/or a label.

## Revendications

1. Transpondeur (1) avec boîtier (3), le transpondeur (1) étant reçu dans le boîtier (3) en tant que pièce d'insertion (2),
**caractérisé en ce**
**que** le boîtier (3) présente en tant que composant externe un élément de fond séparé (4) et un couvercle séparé (6), le boîtier (3) présentant sur son élément de fond (4) au moins un élément écarteur (7) de sorte que le boîtier (3) est écarté d'une surface de réception (8) à l'état monté sur celle-ci de telle manière qu'une fente (9) est formée entre l'élément de fond (4) et la surface de réception (8).

2. Transpondeur selon la revendication 1, **caractérisé en ce que** l'élément de fond (4) est réalisé en forme de plaque et présente l'écarteur (7) sur son côté inférieur (11).

3. Transpondeur selon la revendication 1 ou 2, **caractérisé en ce que** l'élément de fond (4) est réalisé de manière carrée, un écarteur (7) étant à chaque fois associé à un coin (12) de l'élément de fond (4).

4. Transpondeur selon l'une quelconque des revendications précédentes, **caractérisé en ce que** l'élément de fond (4) présente un élément de réception (14) pour la réception du transpondeur (1) sur son côté supérieur (13) opposé au côté inférieur (11).

5. Transpondeur selon l'une quelconque des revendications précédentes, **caractérisé en ce que** la pièce d'insertion (2) peut être reliée à l'élément de fond (4).

6. Transpondeur selon l'une quelconque des revendications précédentes, **caractérisé en ce que** la pièce d'insertion (2) est réalisée de manière flexible.

7. Transpondeur selon l'une quelconque des revendications précédentes, **caractérisé en ce que** le couvercle (6) présente une configuration adaptée à l'élément de fond (4).

8. Transpondeur selon l'une quelconque des revendications précédentes, **caractérisé en ce que** le couvercle (6) peut être relié à l'élément de fond (4).

9. Transpondeur selon l'une quelconque des revendications précédentes, **caractérisé en ce que** le boîtier (3) peut être relié à un récipient (24).

10. Transpondeur selon l'une quelconque des revendications précédentes, **caractérisé en ce que** le couvercle (6) présente sur son côté extérieur détourné du transpondeur une surface pour la réception d'une impression, d'une inscription, d'un relief et/ou d'une étiquette.
